Europäisches Patentamt

European Patent Office

Office européen des brevets

(19)

(11) Publication number: **0 102 758**
**B1**

(12)

# EUROPEAN PATENT SPECIFICATION

(45) Date of publication of patent specification: **03.02.88**

(51) Int. Cl.⁴: **G 02 B 6/06, H 01 J 29/89**

(21) Application number: **83304485.2**

(22) Date of filing: **03.08.83**

(54) Method of forming an image transmitting guide.

(30) Priority: **06.08.82 JP 137083/82**
**11.03.83 JP 40492/83**

(43) Date of publication of application:
**14.03.84 Bulletin 84/11**

(45) Publication of the grant of the patent:
**03.02.88 Bulletin 88/05**

(84) Designated Contracting States:
**DE FR GB IT NL SE**

(56) References cited:
**DE-A-2 130 275**
**FR-A-2 236 194**
**FR-A-2 240 459**

(73) Proprietor: **THE FURUKAWA ELECTRIC CO., LTD.**
**6-1, 2-chome, Marunouchi Chiyoda-ku Tokyo (JP)**

(72) Inventor: **Shibuya, Seiji Furukawa Electric Co. Ltd.**
**Central Laboratory 9-15, Futaba 2-chome Shinagawa-ku Tokyo (JP)**
Inventor: **Sato, Tuguo Furukawa Electric Co. Ltd.**
**Central Laboratory 9-15, Futaba 2-chome Shinagawa-ku Tokyo (JP)**
Inventor: **Komatsu, Wataru Furukawa Electric Co. Ltd.**
**Central Laboratory 9-15, Futaba 2-chome Shinagawa-ku Tokyo (JP)**
Inventor: **Simizu, Takeo Furukawa Electric Co. Ltd.**
**Central Laboratory 9-15, Futaba 2-chome Shinagawa-ku Tokyo (JP)**

(74) Representative: **Crawford, Andrew Birkby et al**
**A.A. THORNTON & CO. Northumberland House 303-306 High Holborn London WC1V 7LE (GB)**

## Description

This invention relates to a method of forming an image transmitting guide from a multiplicity of optical fiber strands.

An image transmitting guide has been constructed as a multiplicity of fiber strands densely packed by keeping the strands as uniform as possible in diameter. The image guide further prevents a light from leaking by increasing its numerical aperture, the diameter of the core of each strand and the thickness of the cladding around each strand.

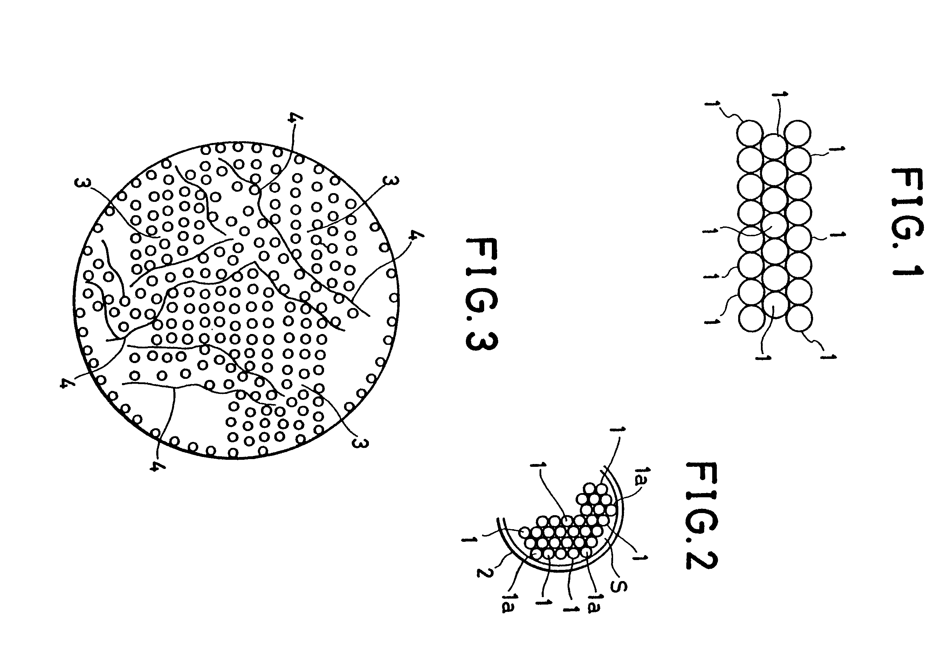

Two known methods of fabricating an image transmitting guide will now be described with reference to Figures 1 to 3. As shown in Figures 1 and 2, several thousands to several ten thousands of optical fiber strands 1, 1, 1, ..., of the same diameter are regularly arranged or ordered so as to make contact with each other. The strands thus arranged are then inserted so as to fill a pipe 2 of the same material as the strands, and the strands 1, 1, 1, ..., together with the pipe 2 are then simultaneously heated and drawn, thereby melting and fusing together the strands. The other known method includes the steps of filling optical fiber strands 1, 1, 1, ..., in a pipe, regularly arranging the strands within the pipe by subjecting them to a water stream or supersonic vibration, and then drawing the strands 1, 1, 1,. .., in the same manner as the first method.

Figure 2 shows the strands 1 arranged within pipe 2 by either of the above-mentioned methods. As shown in Figure 2, when the strands 1, 1, 1, ..., are filled in the pipe 2 of quartz, an air gap S is formed between the strands 1, 1, 1, ..., and the pipe 2.

When the image transmitting guide of Figure 2 is drawn, thereby causing partial collapse the pipe 2 is reduced in diameter and the pressure of the pipe as it reduces in diameter is applied to the strands in contact with the pipe, thus causing the arrangement of the strands 1, 1, 1, ..., to become disordered.

Since the filling density of the strands 1, 1, 1, ..., is high, this stabilizes the ordering of the strands thereby preventing extreme disorder being created. As shown in Figure 3, the ordering is partially changed and cracked disorders (a dislocation within the ordering 4, 4, 4), ..., occur between the ordered regions 3, 3, 3, ....

Such dislocations of the arrangement or ordering of the strands not only become an obstacle to observation of the arrangement, but also cause a decrease in the quality of transmitted image and, since the fiber strands are formed in an ordered pattern a moiré effect occurs when the guide is connected to a TV camera.

The moiré effect occurs, as is known, when the spacing of an array of strands substantially coincides with the spacing frequency of a TV scanning line.

GB—A—1470889 acknowledges the problem of disturbing moiré effects due to the stacking of fibers or fiber bundles in fused fiber-optic plates.

It refers to prior attempts to avoid regularity in stacking to reduce moiré effects, but that such attempts were in conflict with the requirements of stacking density and were difficult to achieve with large numbers of fiber strands, and further defects were created. To overcome this problem GB—A—1470889 proposed marking an optical fiber strand by forming it of a different colour from the other fiber strands within an ordered array so that when two fiber plates were coupled together the marked strands could be aligned, thereby to minimize moiré effects. However this proposed solution introduces further difficulties and problems, particularly in aligning the marked fiber strands and does not remove the basic cause of the moiré effect, as has been described above with reference to Figures 1, 2 and 3.

Accordingly, a primary object of this invention is to provide an image transmitting guide which eliminates or reduces the drawbacks of the known guides above described and which can reduce a moiré effect produced when the guide is connected to a TV camera.

The present invention provides a method of forming an image transmitting guide comprising:

providing a multiplicity of optical fiber strands each having an inner light-transmitting core surrounded by cladding, said fiber strands having two or more different diameters with respect to one another, and the smallest difference in diameter between strands of different diameter being more than 5%,

mixing and assembling said multiplicity of fiber strands of different diameters in a bundle, in such a manner that the strands are arranged at random in the cross-section of the bundle whilst extending in a parallel relationship along the bundle; and

drawing and diffusing together said bundle by the application of heat so as to leave no spaces between the strands whereby said image transmitting guide is formed.

In accordance with the invention, even if a small disorder occurs in the arrangement of adjacent optical fiber strands during drawing, the strands will rearrange themselves in a new random arrangement. Thus dislocations or pinholes causing harmful optical effects are not created and images of good contrast can be obtained due to the reduction in leakage of light, and a uniform quality of picture can be obtained without moiré patterns in view of the random arrangement of the strands.

Preferred embodiments of the invention will now be described with reference to the accompanying drawings wherein:

Fig. 1 is an explanatory view showing optical fiber strands ordered in a known regular array;

Figure 2 is a sectional view of a known image transmitting guide prior to the drawing operation employing the array of Figure 1;

Figure 3 is a sectional view of the image transmitting guide of Figure 2 subsequent to the drawing operation;

Figure 4 is a sectional view of a first embodiment of an image transmitting guide according to the present invention; and

Figure 5 is a sectional view of a second embodiment of an image transmitting guide according to the invention.

The present invention will now be described in more detail with reference to the accompanying drawings.

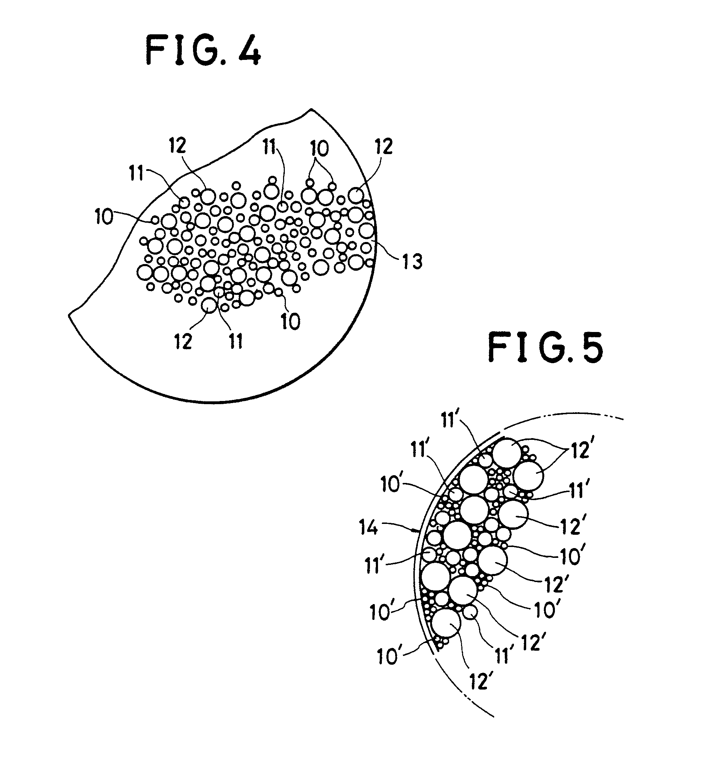

In Figure 4, which shows an embodiment of an image transmitting guide according to the present invention, the guide comprises fiber cores 10, 10, 10, . . ., 11, 11, 11, . . ., 12, 12, 12, . . ., and an outer cladding 13 for covering the cores 10, 10, 10, . . ., 11, 11, 11, . . ., and 12, 12, 12, . . .. The cores 10, 11, 12 are arranged at random in the cross-section of the guide whilst being longitudinally aligned and are immersed in the integrated cladding 13. Further, the diameters $d$ of the strands 10, 11, 12 are formed differently in the relationship of $d_{10}<d_{11}<d_{12}$.

Figure 5 shows another embodiment of an image transmitting guide according to the present invention. The guide as shown in Figure 5 is obtained by a method of fabricating the image guide which comprises the steps of filling optical fiber strands 10', 10', 10', . . ., 11', 11', 11', . . ., and 12', 12', 12', . . ., of more than two different diameters in a glass pipe 14, then collapsing by heat the pipe 14 filled with the optical fiber strands, or drawing the guide in a heated condition without first collapsing the pipe.

In this case, the ratio of the optical fibers strands 10', 10', 10', . . ., (similarly 11', 11', 11', . . .), and 12', 12', 12', . . .), belonging to one type of diameter to the entire number of pieces may be more than 30%, and the smallest difference in diameter between strands (10' and 11', 11' and 12') of different diameters is set to more than 5%.

In the image transmitting guide thus obtained by mixing and disposing the optical fiber strands of two or more different diameters, the cores are arranged at random in a cross-section of the guide whilst being longitudinally aligned, and when connected to a TV camera any moiré effect can be accordingly reduced.

In addition, in the image transmitting guide thus obtained there is no dislocation of an ordered arrangement of the strands, because when the optical fiber strands of two or more different diameters are mixed, the strands are arranged at random.

In other words, even if a small disorder in the arrangement of the cores occurs among adjacent strands in the state that the strands are arranged at random, the strands are rearranged in new random arrangement, with the result that, since the strands are rearranged from the old random arrangement to the new random arrangement, a visual disorder arising from a dislocation does not occur.

The characteristics of an image transmitting guide according to the present invention will now be described in comparison with that of a conventional image transmitting guide.

The transmission of light in a fiber strand generally depends upon the normalized frequency $v$ which obeys the following equation in a fiber strand of the step-index type:

$$v^2=\omega(\varepsilon_1-\varepsilon_2)\mu_o a^2 \qquad (1)$$

where

w: angular frequency of light to be transmitted
$\varepsilon_1$, $\varepsilon_2$: dielectric constants of the core and the cladding of the strand
$\mu_o$: vacuum magnetic permeability
a: diameter of strand core.

In the above equation (1), the light wave is propagated in a mode having a phase constant $\beta$ which is a function of $v$.

By considering the coupling of power between cores of two strands a, b the following coupling equations can be obtained:

$$\frac{dA}{dZ}=-\beta aA+KabB \ldots \qquad (2)$$

$$\frac{dB}{dZ}=-\beta bA+KabB \ldots \qquad (3)$$

where

Kab: coupling coefficient (which depends upon the transmission mode and the spacing of strands)
A, B: amplitudes of transmitted waves in the strands a, b
$\beta a$, $\beta b$: phase constants of the transmitted waves in the cores a, b
Z: coordinates variables.

When the equations (2) and (3) are solved the following answers can be obtained.

i) In case of $Kab\gg(\beta a-\beta b)/2$
Power is substantially completely transferred between the strands a and b.

ii) In case of $Kab\ll(\beta a-\beta b)/2$
No power is substantially transferred between the strands a and b.

Since the spacing between the strands is small in the invention, Kab is considerably large, and Kab becomes extremely large in the vicinity of the cut-off frequency.

The wavelength to be used is in the range of visible light near the cut-off frequency, and the range of the wavelength to be transmitted is wide.

In a conventional image transmitting guide, the diameter and refractive index difference of the strands are all the same, $\beta a=\beta b$ accordingly exists, which corresponds to the case of the above paragraph (i) as described above, and the leakage of the light becomes substantial.

On the other hand, the image transmitting guide having different diameter strands according to the present invention has two or more different diameters as described above and the values of $v$ differ according to equation (1) and thus $\beta a\neq\beta b$.

In other words, in the image transmitting guide of the present invention, the conditions described in the above paragraph (ii) can be satisfied, thereby extremely reducing the undesirable transfer of light energy between adjacent strands.

In view of the leakage of the light between adjacent strands, the difference of the diameters of the cores of different strands in the image transmitting guide is more than 5%. If the difference of the diameters of the cores is larger than required, the resolution of the image within the cores having larger diameter decreases, and thus the difference of the extreme core diameters is set in the range as below:

$$0.7 \leqq d\ min/d\ max \leqq 0.9$$

where
d min: the minimum core diameter
d max: the maximum core diameter.
Examples of the present invention will be described:

Example 1

5,000 optical fiber strands, each of 275 µm diameter and each having a core of 200 µm diameter, and 5,000 optical fiber strands, each of 325 µm diameter each having a core of 200 µm diameter were closely mixed, in a quartz tube, and an image transmitting guide was then fabricated therefrom.

Since this guide is fabricated by mixing the optical fiber strands of two difference diameters at random, it does not have any visible dislocations, and the optical fiber strands could be densely filled in the quartz tube, and were arranged stably at random, thereby eliminating pinholes and enabling good image transmission.

Example 2

1,000 optical fiber strands, each having a 2/3 ratio of core diameter/strand diameter and a strand diameter of 400 µm, and 2,000 optical fiber strands, each of 300 µm strand diameter, were densely filled in a quartz tube, and an image transmitting guide was fabricated therefrom.

In this image transmitting guide, the strands were arranged at random, and no dislocation nor defect was observed.

However since the number of strands was less than 3,000 pieces, a decrease in the quality of transmitted image was observed.

Example 3

5,000 optical fiber strands, each of 275 µm in diameter and of 183 µm core diameter, and 5,000 optical fiber strands, each of 325 µm in diameter and of 216 µm core diameter, were mixed, the mixture was densely filled in a quartz tube, and an image transmitting guide was fabricated therefrom.

Example 4

3,400 optical fiber strands, each of 275 µm diameter and of 183 µm core diameter, 3,400 optical fiber strands, each of 300 µm diameter and of 200 µm core diameter, and 3,400 strands, each of 325 µm diameter and of 216 µm core diameter were mixed, the mixture was densely filled in a quartz tube, and an image transmitting guide was fabricated therefrom.

No dislocation nor defects were observed in the cases of Examples 3 and 4, as with Example 2.

Example 5

3,400 optical fiber strands, each of 270 µm diameter and 180 µm core diameter, 3,400 optical fiber strands, each of 300 µm diameter and 200 µm core diameter and 3,400 optical fiber strands, each of 330 µm diameter and 220 µm core diameter, were mixed, the mixture was filled in a quartz tube and the material was treated to fabricate an image transmitting guide.

No pinholes were caused by the mixing of strands in this example, the defect of chrysanthemum pattern was not observed and crosstalk characteristics were excellent as compared with the guide fabricated by Example 4.

The condition that two or more types of core diameters are included in the image transmitting guide according to the invention may be met by employing optical fiber strands in which the ratio of the core diameter to the optical fiber strand diameter is constant, alternatively optical fiber strands may be employed in which the core diameter, the ratios of the core diameter to the optical fiber strands diameter and the thickness of the cladding are all different.

According to the image transmitting guide fabricated by the method of the present invention as described above, a multiplicity of strands are advantageously arranged at random. No dislocation of strand arrangement nor pinholes can be observed by the random arrangement of the strands.

Further, the guide fabricated by the method of present invention has two or more different diameters of the strand cores. Accordingly, the leakage of the light can be reduced, thereby obtaining an image of improved contrast, uniform quality of picture due to the random arrangement of the cores, and a moiré hardly occurs even in a connection to a TV camera.

According to the method of the present invention, the optical fiber strands having two or more different diameters of strands are advantageously assembled when the base material for the image guide is produced by assembling a number of optical fiber strands in a longitudinally aligned state. Therefore, when fabricated, the optical fiber strands can be densely filled in a quartz tube, and a guide having no dislocations nor pinholes can be simply fabricated.

**Claims**

1. A method of forming an image transmitting guide comprising:
    providing a multiplicity of optical fiber strands each having an inner light-transmitting core surrounded by a cladding, said fiber strands having two or more different diameters with respect to one another, and the smallest difference in diameter between strands of different diameter being more than 5%,

mixing and assembling said multiplicity of fiber strands of different diameters in a bundle, in such a manner that the strands are arranged at random in the cross-section of the bundle whilst extending in a parallel relationship along the bundle, and

drawing and fusing together said bundle by the application of heat so as to leave no spaces between the strands, whereby said image transmitting guide is formed.

2. A method as claimed in claim 1 wherein the ratio of the outer diameter of each strand to the diameter of its core is constant for all strands.

3. A method as claimed in claim 1 wherein the thickness of the cladding is the same for all strands.

4. A method as claimed in claim 1 wherein the strands of one diameter have a different diameter core and a different ratio of strand diameter to core diameter as compared to the strands of different diameter.

5. A method as claimed in claim 1 wherein the amount of strands of one particular diameter is more than 30% of the total number of strands.

6. An image transmitting guide obtainable by the method according to any one of the preceding claims.

## Patentansprüche

1. Ein Verfahren zur Bildung eines Bild-Übertragungsleiters mit:

dem Bereitstellen einer Vielzahl optischer Faserstränge, deren jeder einen von einer Umhüllung umgebenen inneren lichtübertragenden Kern umfaßt, wobei die genannten Faserstränge zwei oder mehr bezüglich zueinander unterschiedliche Durchmesser aufweisen und der geringste Unterschied im Durchmesser zwischen Strängen unterschiedlicher Durchmesser größer als 5% ist,

dem Mischen und Zusammenstellen der genannten Vielzahl von Fassersträngen unterschiedlicher Durchmesser in einem Bündel in einer solchen Weise, daß die Stränge im Querschnitt des Bündel willkürlich angeordnet sind, wohingegen sie in einer parallelen Zuordnung entlang dem Bündel verlaufen, und

dem Strecken und Zusammenschmelzen des genannten Bündels durch Anwendung von Wärme, so daß keine Zwischenräume zwischen den Strängen zurückbleiben, wodurch der genannte Bild-Übertragungsleiter geformt ist.

2. Ein Verfahren nach Anspruch 1, in welchem das Verhältnis des Außendurchmessers jedes Stranges zum Durchmesser seines Kerns für alle Stränge konstant ist.

3. Ein Verfahren nach Anspruch 1, in welchem die Dicke der Umhüllung die gleiche für alle Stränge ist.

4. Ein Verfahren nach Anspruch 1, in welchem die Stränge mit einem Durchmesser einen anderen Durchmesserkern und ein anderes Verhältnis des Strangdurchmessers zum Kerndurchmesser im Vergleich zu den Strängen anderer Durchmesser aufweisen.

5. Ein Verfahren nach Anspruch 1, in welchem die Summe von Strängen eines bestimmten Durchmessers mehr als 30% der Gesamtzahl der Stränge beträgt.

6. Ein Bild-Übertragungsleiter, der mittels des Verfahrens nach einem der vorhergehenden Ansprüche erzielbar ist.

## Revendications

1. Procédé de formation d'un guide de transmission d'image comprenant les opérations suivantes:

produire une multiplicité de brins de fibres optiques ayant chacun une âme intérieure de transmission de lumière entourée par un revêtement, lesdits brins de fibres possédant deux diamètres, ou plus, différentes entre eux, la plus petite différence de diamètre entre brins de diamètres différents étant supérieure à 5%,

mélanger et assembler ladite multiplicité de brins de fibres de diamètres différents en un faisceau, de telle manière que les brins soient disposés au hasard dans la section droite du faisceau en même temps qu'il ss'étendent parallèlement à la direction du faisceau, et

tirer et fondre ensemble ledit faisceau par application de chaleur, de manière à ne laisser aucun espace entre les brins, grâce à quoi ledit guide de transmission d'image est formé.

2. Procédé selon la revendication 1, où le rapport du diamètre extérieur de chaque brin au diamètre de son âme est constant pour tous les brins.

3. Procédé selon la revendication 1, où l'épaisseur du revêtement est la même pour tous les brins.

4. Procédé selon la revendication 1, où les brins d'un certain diamètre ont une âme de diamètre différent et un rapport différent du diamètre du brin au diamètre de l'âme, lorsqu'on effectue la comparaison avec les brins ayant des diamètres différents.

5. Procédé selon la revendication 1, où la quantité de brins ayant un diamètre particulier est supérieure à 30% du nombre total des brins.

6. Guide de transmission d'image que l'on peut obtenir par le procédé selon l'une quelconque des revendications précédentes.

# FIG. 1

1     1       1

1         1

1       1   1   1

# FIG.2

1a     1

1       S

        1a

        1

1       1

        1a

1       2

# FIG.3

4

3         3

4

3         4

# FIG. 4

# FIG. 5